# EUROPEAN PATENT SPECIFICATION

(11) **EP 3 426 991 B1**
(45) Date of publication and mention of the grant of the patent: **24.02.2021**
(21) Application number: 17711970.8
(22) Date of filing: 08.03.2017
(51) Int. Cl.: F25B 5/02, F25B 27/00, F25D 29/00, F25B 31/00, F25B 41/04, F25D 11/00, F02B 29/04, F02M 31/20, B60H 1/32, B60H 1/00

(54) **TRANSPORT REFRIGERATION UNIT AND METHOD OF OPERATING**
TRANSPORTKÜHLEINHEIT UND BETRIEBSVERFAHREN
GROUPE FRIGORIFIQUE TRANSPORTABLE ET PROCÉDÉ POUR SON FONCTIONNEMENT

(30) Priority: 10.03.2016 US 201662306471 P
(43) Date of publication of application: 16.01.2019
(73) Proprietor: Carrier Corporation, Farmington, CT 06032 (US)
(72) Inventor: SUN, Jian, Syracuse, New York 13221 (US)
(74) Representative: Dehns
(86) International application number: PCT/US2017/021326
(87) International publication number: WO 2017/156104

(56) References cited:
- EP-A2- 1 342 893
- US-A- 4 683 725

## Description

The embodiments herein generally relate to transport refrigeration units and, more particularly, to an engine inlet air chilling system for use with such transport refrigeration units.

Refrigerated trucks and trailers are commonly used to transport perishable cargo, such as, for example, produce, meat, poultry, fish, dairy products, cut flowers, and other fresh or frozen perishable products. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

In an all electric transport refrigeration system, a prime mover, most commonly a diesel engine, carried on and considered part of the transport refrigeration system, drives an AC synchronous generator that generates AC power. The generated AC power is used to power an electric compressor motor for driving the refrigerant compressor of the transport refrigeration unit and also powering electric AC fan motors for driving the condenser and evaporator motors and electric heaters associated with the evaporator.

In engine-generator driven systems, engine power decreases with increasing intake air temperature. For example, it has been observed in some systems that a 10 degree (F) intake air temperature increase can result in a 2-3% engine power loss. In high temperature ambient conditions, the engine suffers the worst power loss while the truck-trailer unit demands the highest cooling capacity. Conventionally, a suction modulation valve is used to reduce the capacity in order to meet the engine power limits. The undesirable effects of this conventional approach are a larger engine size design requirement and inefficient operation caused by the suction modulation valves, for example.

Document US4683725 discloses an air conditioner for automotive vehicles capable of cooling intake air supplied to an internal combustion engine.

Document EP1342893 discloses a cooling device for a turbocharger that has a first cooling stage and at least one second cooling stage. The cooling device has a coolant circuit with an evaporator forming part of the coolant circuit. Both of these documents disclose all the technical features from the preambles of the independent claims 1 and 6.

The present invention is disclosed in the independent claims 1 and 6. Further embodiments are disclosed in the dependent claims.

Viewed from a first aspect, the present invention provides a transport refrigeration unit comprising: a refrigeration cycle having a refrigerant routed therethrough, the refrigeration cycle including a compressor, a condenser, an evaporator and an expansion valve as well as a controller; an engine operatively coupled to a generator to power the compressor; an inlet structure receiving an inlet air stream for routing to the engine; and a cooling coil arrangement disposed within the inlet structure, the refrigerant of the refrigeration cycle selectively routed through the cooling coil arrangement to cool the inlet air stream; wherein the refrigerant is separated into a first stream and a second stream upstream of an evaporator inlet, the first stream routed to the evaporator and the second stream routed to the inlet structure; characterised in that the ratio of the first stream to the second stream is selectively determined by operation of an inlet coil modulation valve disposed upstream of the inlet structure.

In addition to one or more of the features described above, further embodiments may include that the compressor is directly driven by an electric motor, the electric motor powered by the generator.

In addition to one or more of the features described above, further embodiments may include at least one suction modulation valve disposed between an evaporator outlet and a compressor inlet.

In addition to one or more of the features described above, further embodiments may include that the at least one suction modulation valve is only operated as a supplement during cooling of the inlet air stream.

In addition to one or more of the features described above, further embodiments may include that the generator powers a condenser fan and an evaporator fan.

Viewed from a second aspect, the present invention provides a method of operating a transport refrigeration unit as disclosed in the independent claim 1 comprising: powering a compressor of a refrigerant cycle with a generator driven by an engine; ingesting an inlet air stream into the engine; cooling the inlet air stream with a refrigerant flowing through a cooling coil arrangement disposed within an inlet structure disposed upstream of the engine, and separating the refrigerant into a first stream and a second stream upstream of an evaporator, the first stream routed to the evaporator and the second stream routed to the inlet structure; characterised in that the method further comprises regulating the flow of the refrigerant to the inlet structure with an inlet coil modulating valve disposed upstream of the inlet structure to selectively determine how much refrigerant is diverted away from the evaporator to the inlet structure.

In addition to one or more of the features described above, further embodiments may include that the compressor is directly driven by an electric motor powered by the generator.

### BRIEF DESCRIPTION OF THE DRAWINGS

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 is a schematic illustration of a transport refrigeration unit system according to the present invention; and
FIG. 2 is a schematic illustration of the transport refrigeration unit system according to an example not being part of the present invention.

### DETAILED DESCRIPTION OF THE DISCLOSURE

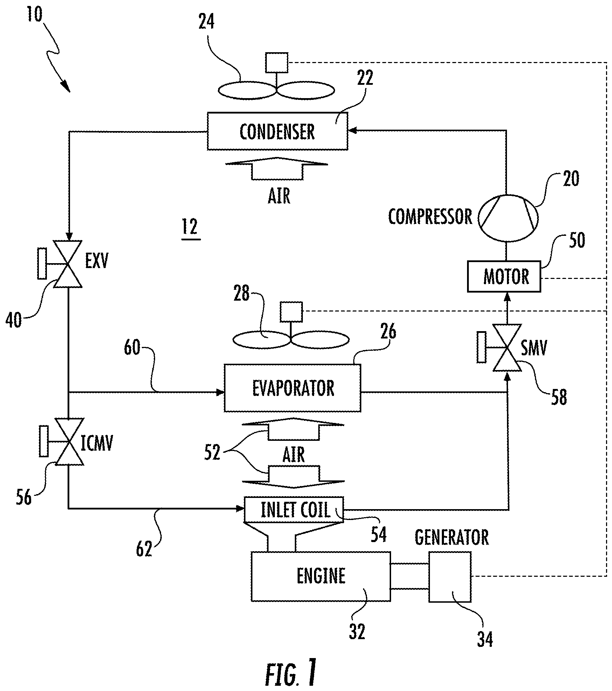

Referring to FIG. 1, a transport refrigeration unit system (TRU system) according to the present invention is schematically illustrated and referenced generally with numeral 10. The TRU system 10 controls temperature within a container 12. In particular, the TRU system 10 is configured to maintain a prescribed thermal environment within the container 12 (e.g., cargo in an enclosed volume). The components of the TRU system 10 described herein may be contained in an enclosed or partially enclosed volume, with the components coupled to the container at any suitable location.

The TRU system 10 can operate to induct air at a first temperature and to exhaust air at a second temperature. In one example, the exhaust air from the TRU system 10 will be warmer than the inducted air such that the TRU system 10 is employed to warm the air in the container 12. In one example, the exhaust air from the TRU system 10 will be cooler than the inducted air such that the TRU system 10 is employed to cool the air in the container 12.

The TRU system 10 can be used with a trailer, an intermodal container, a train railcar, a ship or the like, used for the transportation or storage of goods requiring a temperature controlled environment such as, for example, foodstuffs and medicines (e.g., perishable or frozen).

As shown in FIG. 1, the TRU system 10 includes a compressor 20, a condenser 22, a condenser fan 24, an evaporator 26, an evaporator fan 28, and a controller in operative communication with some or all of the other components of the TRU system 10.

The condenser 22 is operatively coupled to a discharge port of the compressor 20. The evaporator 26 is operatively coupled to an input port of the compressor 20. An expansion valve 40 is connected between an output of the condenser 22 and an input of the evaporator 26. The condenser fan 24 is positioned to direct an air stream onto the condenser 22. The air stream from the condenser fan 24 allows heat to be removed from refrigerant circulating within the condenser 22. The evaporator fan 28 is positioned to direct an air stream onto the evaporator 26. The evaporator fan 28 is located and ducted so as to circulate the air contained within the enclosed volume of the container 12. In one embodiment, the evaporator fan 28 can direct the stream of air across the surface of the evaporator 26. Heat can thereby be removed from the air, and the reduced temperature air can be circulated within the enclosed volume of the container 12 to lower the temperature of the enclosed volume.

The compressor 20 is powered by an engine 32, such as a diesel engine, via a generator 34 (e.g., diesel generator) operatively coupled to the engine 32. Other components of the TRU system 10 may also be powered by the generator 34. More particularly, the compressor 20 is driven by an electric motor 50 that is powered by the generator 34. The electric motor 50 may be disposed internally within the compressor 20 with a drive shaft interconnected with a shaft of the compressor 20, the components sealed within a common housing of the compressor 20.

To augment the power of the engine 32, an air chilling system is provided to counter power losses associated with elevated inlet air temperatures. The engine 32 receives an inlet air stream 52 provided to the engine 32 and the evaporator 26. An inlet structure 54 is disposed upstream of the engine 32. The inlet structure 54 includes at least one coil arrangement disposed therein that exchanges heat with the inlet air stream 52. The refrigerant that flows through the above-described refrigeration cycle is provided to the coil arrangement within the inlet structure 54 to cool the inlet air stream 52. The cooling of the inlet air stream 52 increases the power output of the engine 32.

The refrigerant is provided through the refrigeration cycle tubing. According to the present invention (FIG. 1), the refrigerant is selectively distributed to the evaporator 26 and the engine 32 in a diverting manner. According to the present invention the refrigerant is separated into a first stream 60 that is routed to an evaporator inlet and a second stream 62 that is routed to the inlet structure 54. An inlet coil modulation valve 56 is disposed upstream of the inlet structure 54 to selectively determine the ratio of the first stream (60) to the second stream (62). If moderate ambient conditions, cooling may not be required and the inlet coil modulation valve 56 may be closed.

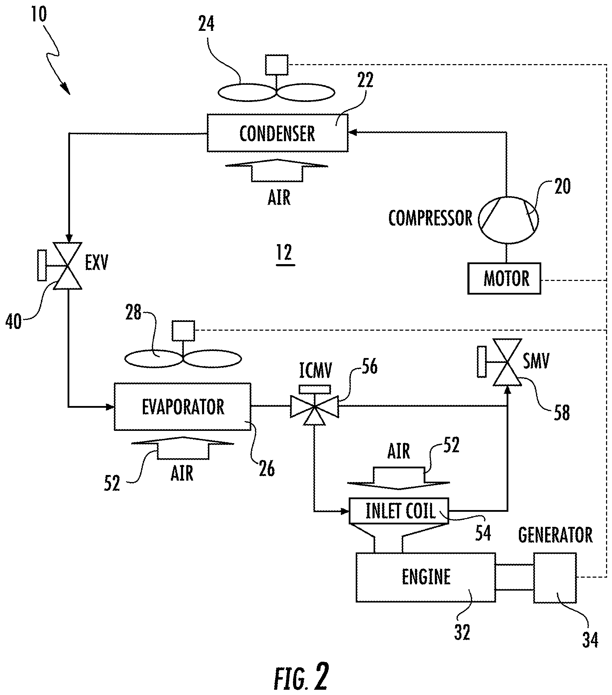

In FIG. 2, which shows an example not being part of the present invention, the evaporator 26 receives the entire flow of the refrigerant and the selective determination of whether refrigerant is flowed to the inlet structure 54 is made downstream of the evaporator 26, as shown with placement of the inlet coil modulation valve 56 in FIG. 2.

The embodiments and examples described herein may also rely on use of one or more suction modulation valves 58 located upstream of the compressor 20 to selectively manipulate flow into the compressor 20. In some embodiments, use of only cooling of the inlet air stream 52 at the inlet structure 54 is solely sufficient to effect desirable operation of the system, however, the suction modulation valves 58 may be relied upon to supplement such cooling in certain conditions.

Advantageously, cooling of the inlet air stream 52 provided by the embodiments described herein reduce the engine design capacity and improve the system efficiency by minimizing the usage of the suction modulation valve(s).

While the disclosure has been described in detail in connection with only a limited number of embodiments, it should be readily understood that the disclosure is not limited to such disclosed embodiments. Additionally, while various embodiments of the disclosure have been described, it is to be understood that aspects of the invention may include only some of the described embodiments. Accordingly, the invention is not to be seen as limited by the foregoing description, but is only limited by the scope of the appended claims.

## Claims

1. A transport refrigeration unit (10) comprising:
a refrigeration cycle having a refrigerant routed therethrough, the refrigeration cycle including a compressor (20), a condenser (22), an evaporator (26), an expansion valve (40) and a controller;
an engine (32) operatively coupled to a generator (34) to power the compressor (20);
an inlet structure (54) receiving an inlet air stream (52) for routing to the engine (32); and
a cooling coil arrangement disposed within the inlet structure (54), the refrigerant of the refrigeration cycle selectively routed through the cooling coil arrangement to cool the inlet air stream (52);
wherein the refrigerant is separated into a first stream (60) and a second stream (62) upstream of an evaporator inlet, the first stream (60) routed to the evaporator (26) and the second stream (62) routed to the inlet structure (54);
**characterised in that** the ratio of the first stream (60) to the second stream (62) is selectively determined by operation of an inlet coil modulation valve (56) disposed upstream of the inlet structure (54).

2. The transport refrigeration unit of any of the preceding claims, wherein the compressor (20) is directly driven by an electric motor (50), the electric motor powered by the generator (34).

3. The transport refrigeration unit of any of the preceding claims, further comprising at least one suction modulation valve (58) disposed between an evaporator (26) outlet and a compressor (20) inlet.

4. The transport refrigeration unit of claim 3, wherein the at least one suction modulation valve (58) is only operated as a supplement during cooling of the inlet air stream (52).

5. The transport refrigeration unit of any of the preceding claims, wherein the generator (34) powers a condenser fan (24) and an evaporator fan (28).

6. A method of operating a transport refrigeration unit according to claim 1 comprising:
powering a compressor (20) of a refrigerant cycle with a generator (34) driven by an engine (32);
ingesting an inlet air stream (52) into the engine (32);
cooling the inlet air stream with a refrigerant flowing through a cooling coil arrangement disposed within an inlet structure (54) disposed upstream of the engine (32), and
separating the refrigerant into a first stream (60) and a second stream (62) upstream of an evaporator (26), the first stream (60) routed to the evaporator (26) and the second stream (62) routed to the inlet structure (54);
**characterised in that** the method further comprises regulating the flow of the refrigerant to the inlet structure (54) with an inlet coil modulating valve (56) disposed upstream of the inlet structure (54) to selectively determine how much refrigerant is diverted away from the evaporator (26) to the inlet structure (54).

7. The method of claim 6, wherein the compressor (20) is directly driven by an electric motor (50) powered by the generator (34).

## Patentansprüche

1. Transportkühleinheit (10), umfassend:
einen Kühlzyklus, der ein dort hindurch geleitetes Kältemittel aufweist, wobei der Kühlzyklus einen Kompressor (20), einen Kondensator (22), einen Verdampfer (26), ein Expansionsventil (40) und eine Steuerung beinhaltet;
einen Motor (32), der betrieblich mit einem Generator (34) gekoppelt ist, um den Kompressor (20) zu versorgen;
eine Einlassstruktur (54), die einen Einlassluftstrom (52) zum Leiten zum Motor (32) empfängt; und
eine Kühlspulen-Baugruppe, die innerhalb der Einlassstruktur (54) angeordnet ist, wobei das Kältemittel des Kühlzyklus selektiv durch die Kühlspulen-Baugruppe geleitet wird, um den Einlassluftstrom (52) zu kühlen;
wobei das Kältemittel in einen ersten Strom (60) und einen zweiten Strom (62) stromaufwärts von einem Verdampfereinlass getrennt wird, wobei der erste Strom (60) zu dem Verdampfer (26) geleitet wird, und der zweite Strom (62) zu der Einlassstruktur (54) geleitet wird;
**dadurch gekennzeichnet, dass** das Verhältnis des ersten Stroms (60) zum zweiten Strom (62) selektiv durch Betreiben eines Einslassspulen-Modulationsventils (56), das stromaufwärts der Einlassstruktur (54) angeordnet ist, bestimmt wird.

2. Transportkühleinheit nach einem der vorstehenden Ansprüche, wobei der Kompressor (20) direkt von einem Elektromotor (50) angetrieben wird, wobei der Elektromotor durch den Generator (34) versorgt wird.

3. Transportkühleinheit nach einem der vorstehenden Ansprüche, weiter mindestens ein Saugmodulationsventil (58) umfassend, das zwischen einem Auslass des Verdampfers (26) und einem Einlass des Kompressors (20) angeordnet ist.

4. Transportkühleinheit nach Anspruch 3, wobei das mindestens eine Saugmodulationsventil (58) nur als Zusatz während des Kühlens des Einlassluftstroms (52) betrieben wird.

5. Transportkühleinheit nach einem der vorstehenden Ansprüche, wobei der Generator (34) einen Kondensatorlüfter (24) und einen Verdampferlüfter (28) versorgt.

6. Verfahren zum Betreiben einer Transportkühleinheit nach Anspruch 1, umfassend:
Versorgen eines Kompressors (20) eines Kühlzyklus mit einem Generator (34), der durch einen Motor (32) angetrieben wird;
Aufnehmen eines Einlassluftstroms (52) in den Motor (32);
Kühlen des Einlassluftstroms mit einem Kältemittel, das durch eine Kühlspulen-Baugruppe fließt, die innerhalb einer Einlassstruktur (54) angeordnet ist, die stromaufärts des Motors (32) angeordnet ist; und
Trennen des Kältemittels in einen ersten Strom (60) und einen zweiten Strom (62) stromaufwärts von einem Verdampfer (26), wobei der erste Strom (60) zu dem Verdampfer (26) geleitet wird, und der zweite Strom (62) zu der Einlassstruktur (54) geleitet wird;
**dadurch gekennzeichnet, dass** das Verfahren weiter das Regulieren des Flusses des Kältemittels zu der Einlassstruktur (54) mit einem Einslassspulen-Modulationsventil (56) umfasst, das stromaufwärts der Einlassstruktur (54) angeordnet ist, um selektiv zu bestimmen, wieviel Kältemittel von dem Verdampfer (26) weg zu der Einlassstruktur (54) abgezweigt wird.

7. Verfahren nach Anspruch 6, wobei der Kompressor (20) direkt von einem Elektromotor (50) angetrieben wird, der durch den Generator (34) versorgt wird.

## Revendications

1. Unité de réfrigération de transport (10) comprenant :
un cycle de réfrigération à travers lequel est acheminé un fluide frigorigène, le cycle de réfrigération incluant un compresseur (20), un condenseur (22), un évaporateur (26), un détendeur (40) et un dispositif de commande ;
un moteur (32) fonctionnellement accouplé à un générateur (34) pour alimenter le compresseur (20) ;
une structure d'entrée (54) recevant un flux d'air d'entrée (52) pour acheminement vers le moteur (32) ;
un agencement de bobine de refroidissement disposé dans la structure d'entrée (54), le fluide frigorigène du cycle de réfrigération étant sélectivement acheminé à travers l'agencement de bobine de refroidissement pour refroidir le flux d'air d'entrée (52) ;
dans laquelle le fluide frigorigène est séparé en un premier flux (60) et en un second flux (62) en amont d'une entrée d'évaporateur, le premier flux (60) étant acheminé vers l'évaporateur (26) et le second flux (62) étant acheminé vers la structure d'entrée (54) ;
**caractérisée en ce que** le rapport du premier flux (60) sur le second flux (62) est sélectivement déterminé par le fonctionnement d'un clapet de modulation de bobine d'entrée (56) disposé en amont de la structure d'entrée (54).

2. Unité de réfrigération de transport selon l'une quelconque des revendications précédentes, dans laquelle le compresseur (20) est directement entraîné par un moteur électrique (50), le moteur électrique étant alimenté par le générateur (34).

3. Unité de réfrigération de transport selon l'une quelconque des revendications précédentes, comprenant en outre au moins un clapet de modulation d'aspiration (58) disposée entre une sortie d'évaporateur (26) et une entrée de compresseur (20).

4. Unité de réfrigération de transport selon la revendication 3, dans laquelle l'au moins un clapet de modulation d'aspiration (58) fonctionne seulement comme supplément durant le refroidissement du flux d'air d'entrée (52).

5. Unité de réfrigération de transport selon l'une quelconque des revendications précédentes, dans laquelle le générateur (34) alimente un ventilateur de condenseur (24) et un ventilateur d'évaporateur (28).

6. Procédé de fonctionnement d'une unité de réfrigération de transport selon la revendication 1 comprenant :
l'alimentation d'un compresseur (20) d'un cycle de fluide frigorigène avec un générateur (34) entraîné par un moteur (32) ;
l'apport d'un flux d'air d'entrée (52) dans le moteur (32) ;
le refroidissement du flux d'air d'entrée avec un fluide frigorigène s'écoulant à travers un agencement de bobine de refroidissement disposé dans une structure d'entrée (54) disposée en amont du moteur (32), et
la séparation du fluide frigorigène en un premier flux (60) et un second flux (62) en amont d'un évaporateur (26), le premier flux (60) étant acheminé vers l'évaporateur (26) et le second flux (62) étant acheminé vers la structure d'entrée (54) ;
**caractérisé en ce que** le procédé comprend en outre la régulation de l'écoulement du fluide frigorigène vers la structure d'entrée (54) avec un clapet de modulation de bobine d'entrée (56) disposé en amont de la structure d'entrée (54) pour déterminer sélectivement combien de fluide frigorigène est dévié de l'évaporateur (26) vers la structure d'entrée (54).

7. Procédé selon la revendication 6, dans lequel le compresseur (20) est entraîné directement par un moteur électrique (50) alimenté par le générateur (34).
